Europäisches Patentamt

**European Patent Office**

Office européen des brevets

(19)

(11) Numéro de publication : **0 036 374 B1**

(12)     **FASCICULE DE BREVET EUROPÉEN**

(45) Date de publication du fascicule du brevet :
13.06.84

(51) Int. Cl.³ : **B 23 K   9/02,** B 23 Q  35/127

(21) Numéro de dépôt : 81400417.2

(22) Date de dépôt : 18.03.81

(54) Procédé et appareil de soudage avec suivi automatique du joint à souder.

(30) Priorité : 18.03.80 FR 8006028

(43) Date de publication de la demande :
23.09.81 Bulletin 81/38

(45) Mention de la délivrance du brevet :
13.06.84 Bulletin 84/24

(84) Etats contractants désignés :
DE GB IT

(56) Documents cités :
DE-A- 2 737 055
FR-A- 2 368 078
FR-A- 2 403 151

(73) Titulaire : B.S.L. (BIGNIER SCHMID-LAURENT)
25, Quai Marcel-Boyer
F-94203 Ivry-sur-Seine (FR)

(72) Inventeur : Wascat, Raymond
2, rue des Cerceaux
Cuffies F-02200 Soissons (FR)

(74) Mandataire : Martin, Jean-Jacques et al
Cabinet REGIMBEAU 26, Avenue Kléber
F-75116 Paris (FR)

EP 0 036 374 B1

Jouve, 18, rue St-Denis, 75001 Paris, France

## Description

La présente invention concerne un procédé et un dispositif automatiques destinés à effectuer une opération de soudage de deux rives de tôle l'une contre l'autre en déplaçant une torche de soudage le long du joint séparant les parties de tôle à souder, ou réciproquement en déplaçant les tôles par rapport à une torche de soudage.

Pour que l'opération de soudage s'effectue convenablement, il est nécessaire que l'axe de la torche de soudage suive parfaitement le joint à souder, mais ce joint n'est pas forcément parfaitement rectiligne et il faut donc en permanence effectuer une vérification de la position de la torche par rapport au joint pour modifier éventuellement cette position si cela s'avère nécessaire.

Un exemple d'application dans laquelle il faut effectuer cette vérification de la position de la torche de soudage par rapport au joint à souder est le cas du soudage bord à bord de deux éléments de cylindre que l'on veut réunir par soudage en un seul cylindre de plus grande hauteur : c'est ainsi que l'on soude des éléments de citerne côte à côte, et l'opération de soudage se fait avec une torche qui reste à un emplacement sensiblement fixe tandis que les tôles cylindriques tournent devant elle au fur et à mesure du soudage ; si le joint entre les tôles ne reste pas parfaitement dans un plan contenant l'axe de la torche de soudage, il est nécessaire de déplacer celle-ci légèrement lorsque le joint s'écarte de ce plan.

Dans d'autres cas, ce ne sont pas les tôles qui défilent sous la torche de soudage mais la torche qui se déplace dans le sens de la longueur du joint à souder ; le problème est exactement le même et si le joint s'écarte d'une ligne ou d'un plan contenant l'axe de la torche de soudage, il est nécessaire encore de déplacer la torche latéralement par rapport au joint.

La technique antérieure utilisée actuellement pour réaliser ce suivi du joint pendant le soudage consiste à prévoir que la torche est montée sur une glissière transversale le long de laquelle elle peut se déplacer. Pour la chaudronnerie courante, le déplacement de la torche est effectué manuellement, mais l'opération devient délicate si l'on doit augmenter la précision ou la vitesse de soudage.

Dans les procédés de soudage à plasma, la précision du guidage doit être très élevée et exclut pratiquement un guidage manuel par un opérateur. On a donc déjà proposé d'effectuer un guidage automatique au moyen d'un palpeur mécanique qui reste en permanence en contact avec le joint, la torche suivant alors les mouvements latéraux du palpeur mécanique. Ceci est possible dans le cas où les bords de tôles en contact sont chanfreinés et où le joint à souder forme donc une sorte de rainure que le palpeur mécanique (sous forme de pointe conique ou sphérique par exemple) peut suivre aisément. C'est possible également lorsque les deux tôles à souder se recouvrent, le palpeur pouvant rester appuyer contre le chant de la tôle supérieure. C'est possible encore lorsque les tôles sont perpendiculaires. Cependant, même dans ces cas, l'utilisation d'un palpeur mécanique ne donne satisfaction que si les bords des tôles sont bien réguliers et ne présentent pas trop de défauts.

L'utilisation d'un palpeur, mécanique ou non mécanique, a déjà été proposée dans des procédés de soudage où les deux bords de tôle à souder sont séparés par un intervalle.

Ainsi, le document FR-A-2 403 151 décrit un procédé et un dispositif pour détecter la courbure et la forme du cordon de soudure et la dimension de l'intervalle entre deux pièces à souder. Le dispositif comprend un palpeur que l'on fait osciller en permanence dans l'intervalle des deux pièces à réunir par soudure. Ce palpeur donne des impulsions lors de son passage sur les arêtes des pièces à réunir par soudure, tandis qu'un détecteur fournit une tension électrique correspondant à l'amplitude de l'oscillation du capteur. A l'aide des valeurs de tension enregistrées, on déplace le chariot support du palpeur de manière qu'il oscille au milieu du cordon de soudure. Les informations fournies par le palpeur sont enregistrées jusqu'à ce que le chalumeau de soudage arrive à l'endroit ayant donné naissance à ces informations.

Le document FR-A-2 368 078 concerne un procédé et un dispositif pour la régulation automatique de systèmes sur le milieu de lèvres de soudure, de joints de soudure ou de surépaisseurs de cordon de soudure au moyen d'une ou plusieurs sondes d'exploration électrique ou mécanique. Les signaux obtenus pour les deux flancs de la lèvre, du joint ou de la surépaisseur sont mémorisés pour calculer le milieu de cette lèvre, de ce joint ou de cette surépaisseur. Cette valeur est alors comparée à une valeur électrique correspondant à la position médiane du système, par exemple d'une tête de soudage, pour actionner un dispositif de réglage de la tête de soudage.

En tous cas, dans le cas des tôles sans chanfrein, et en particulier chaque fois que les tôles ont une faible épaisseur et sont soudées bord à bord, le guidage par palpeur mécanique n'est absolument pas possible.

On peut alors envisager des procédés de guidage automatique utilisant des capteurs de position de joint travaillant sans contact avec le joint, par exemple des capteurs optiques. En essayant le remplacement des palpeurs mécaniques par de tels capteurs optiques, et en conservant le principe selon lequel la torche de soudage suit les déplacements du capteur qui lui-même suit le joint à souder, la Demanderesse s'est aperçue que l'on n'arrivait pas à un guidage très précis et surtout fiable étant donné les risques de dérive au sein de l'asservissement, et aussi les risques de décrochage des asservissements dans les cas d'irrégularité du joint à souder, ou même simplement à cause de la difficulté de poursuite optique d'une ligne peu ou irrégulièrement contrastée.

La présente invention propose en conséquence un procédé et un appareil de soudage avec positionnement automatique qui ne présentent pas les inconvénients relevés dans la technique antérieure, c'est-à-dire essentiellement qui soient capables de suivre rapidement et précisément un joint, en minimisant les risques de dérive et de décrochage entre le capteur et le joint qu'il doit suivre.

Pour cela, la présente invention propose d'éviter d'utiliser un capteur qui suit continûment le joint en établissant un signal de rattrapage en tout ou rien dès qu'il y a un écart entre la position de la torche et la position du joint à tout instant au cours de l'opération de soudage.

Au contraire, le procédé de soudage avec positionnement automatique d'une torche de soudage en regard d'un joint entre deux tôles à souder de l'invention, consiste à :

— faire exécuter une oscillation alternative régulière à un détecteur de joint monté à l'avant de la torche et mobile dans une direction transversale à la direction générale du joint, le détecteur fournissant des impulsions de position du joint,

— établir une mesure de position du joint à partir desdites impulsions, et

— déplacer la torche transversalement au moyen d'un moteur en réponse à ladite mesure pour positionner la torche en regard du joint, et est caractérisé par le fait que :

— le détecteur est un détecteur optique fixé à un chariot monté coulissant à l'avant de la torche pour faire exécuter au détecteur un balayage alternatif transversal à la direction générale du joint, le détecteur fournissant une impulsion au moment de son passage au-dessus du joint,

— ladite mesure est une mesure de l'écart temporel entre l'instant d'apparition de cette impulsion et le moment de passage du détecteur dans l'axe de la torche dans la direction générale d'avance de l'opération de soudage, et

— le déplacement transversal de la torche en réponse à ladite mesure s'effectue dans un sens correspondant à une réduction dudit écart temporel. Le coefficient de proportionnalité pouvant être réglé en fonction de la convergence désirée pour le rattrapage de position de la torche par rapport au joint.

On peut noter qu'avec ce procédé, on mesure un écart relatif du joint à souder par rapport à la torche plutôt que par rapport à un repère fixe indépendant de la torche mobile, et cette relativité permet d'éviter notamment des erreurs de dérive susceptibles de se cumuler au cours de l'opération de soudage.

On notera encore qu'une mesure de l'écart de la torche par rapport au joint est effectuée une fois seulement par cycle de balayage du chariot mobile portant le détecteur optique, et cette caractéristique permet d'éviter complètement le risque de décrochage du détecteur par rapport au joint ; en effet, par définition, le détecteur n'est pas accroché en permanence sur le joint mais au contraire il suit un trajet qui coupe régulièrement le joint que l'on est donc sûr de retrouver à chaque balayage.

L'appareil de soudage avec positionnement automatique d'une torche de soudage en regard d'un joint entre deux tôles à souder selon l'invention comprend au moins une glissière transversale de guidage de la torche, un moteur d'entraînement pour déplacer la torche transversalement par rapport à la direction générale du joint, un détecteur de joint monté à l'avant de la torche et soumis à une oscillation alternative régulière dans une direction transversale à la direction générale du joint, le détecteur fournissant des impulsions de position du joint un circuit de mesure pour établir une mesure de position à partir desdites impulsions, et un circuit de commande couplé au circuit de mesure et apte à agir sur le moteur d'entraînement de la torche pour positionner la torche en regard du joint, et est caractérisé par le fait qu'il est prévu, monté sur glissière fixée sur la torche, un chariot mobile par rapport à la torche, également dans une direction transversale à la direction générale du joint à souder et parallèlement à la surface des tôles, avec un moyen pour entraîner le chariot en mouvement alternatif régulier, le chariot portant un moyen de détection optique du joint, apte à fournir une impulsion électrique lorsqu'il passe au-dessus du joint, un capteur de détection d'une position centrale de référence étant prévu pour fournir une impulsion lorsque le moyen de détection optique passe dans l'axe de la torche, et par le fait que le circuit de mesure est apte à établir une mesure algébrique du décalage temporel entre les deux impulsions à chaque cycle de balayage du chariot mobile, et que le circuit de commande couplé au circuit de mesure est apte à agir sur le moteur d'entraînement de la torche dans un sens tendant à réduire ce décalage temporel.

On s'arrange pour que le circuit de mesure établisse une mesure pendant un trajet aller du chariot mobile et enregistre cette mesure, et pour que le circuit de commande agisse pendant le trajet de retour du chariot en fonction de la mesure enregistrée précédemment. Ceci permet en particulier de tenir compte du fait que le moyen de détection optique est placé en avant de la torche de soudage et qu'il ne repère donc pas exactement l'écart entre le point de soudage et le joint, mais un écart légèrement en avant du point de soudage. Si on attend le retour du chariot pour effectuer la correction de position, on peut compenser ce décalage en ajustant la vitesse de balayage du chariot pour que justement le retard apporté à la correction de position corresponde à la durée mise par la tôle pour avancer entre le moyen de détection optique en avant de la torche de soudage et la torche de soudage elle-même.

Le circuit de mesure comprend un circuit de détection du sens de décalage entre les impulsions fournies par les deux moyens de détection, ce circuit de détection agissant sur le sens d'entraînement du ou des moteurs d'entraînement latéral de la torche. Le circuit de mesure comprend aussi un compteur recevant d'une horloge des impulsions à fréquence élevée et comptant un nombre d'impulsions à fréquence élevée émises entre l'apparition des impulsions fournies par les moyens de détection. Le contenu du compteur représente une mesure du décalage temporel cherché.

On prévoit de préférence que le circuit de commande comprend un autre compteur recevant également des impulsions à fréquences élevées et un comparateur pour comparer les comptes des deux compteurs, avec un ensemble de portes logiques recevant le signal du comparateur et celui du circuit de détection de sens pour autoriser l'application d'un courant à un moteur d'entraînement latéral de la torche pendant le trajet retour du chariot tant que les contenus des compteurs ne sont pas identiques.

De préférence encore, l'autre compteur reçoit des impulsions d'une autre horloge que le premier, à une fréquence ajustable qui permet de régler l'amortissement et la convergence de l'asservissement de position ainsi réalisé.

Le fonctionnement et la remise à zéro du circuit de commande des moteurs ainsi que le fonctionnement et la remise à zéro du circuit de mesure sont déclenchés par des interrupteurs de fin de course placés à chaque extrémité du trajet du chariot mobile.

Pour éviter des erreurs de détection de joint se traduisant par une erreur de positionnement de la torche, on prévoit d'éliminer des impulsions trop larges susceptibles d'être émises par le moyen de détection optique, et d'éliminer également des impulsions multiples issues du moyen de détection optique et pouvant apparaître au cours d'un seul balayage. Dans ces cas, on ne modifiera pas la position de la torche de soudage et on attendra un nouveau balayage du chariot et une nouvelle mesure.

D'autres caractéristiques et avantages de l'invention apparaîtront à la lecture de la description détaillée qui suit et qui est faite en référence aux dessins annexés dans lesquels :

la figure 1 représente schématiquement en vue latérale un appareil de soudage selon l'invention ;

la figure 2 représente une vue de face correspondant à la figure 1 ;

la figure 3 représente une vue de dessus correspondant aux figures 1 et 2 ;

la figure 4 représente un exemple de réalisation d'un chariot mobile animé d'un mouvement alternatif et portant un détecteur optique de joint ;

la figure 5 représente un diagramme synoptique des circuits de commande de la torche de soudage en fonction des informations issues notamment du détecteur optique de joint ;

la figure 6 représente un schéma électrique logique détaillé des circuits de commande de positionnement de la torche de soudage selon l'invention.

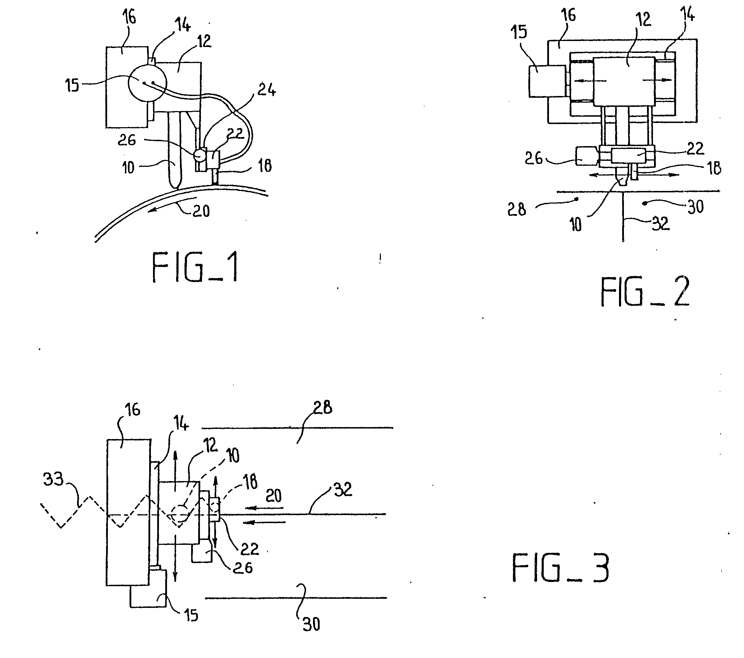

A la figure 1, on voit une torche de soudage 10 qui peut être soit une torche de soudage classique soit une torche de soudage à plasma, et qui est fixée au-dessous d'un châssis mobile 12 porté par une glissière 14 elle-même fixée à un bâti général 16 de la machine de soudage.

La glissière 14 est une glissière motorisée, c'est-à-dire qu'au moins un moteur 15 est capable d'entraîner le châssis 12 en déplacement le long de la glissière 14 ; la direction de ce déplacement est une direction transversale à la direction générale du joint à souder de manière qu'en agissant sur le moteur 15 on puisse placer l'extrémité de soudage de la torche 10 exactement en regard du joint entre les tôles à souder.

La machine représentée à la figure 1 est notamment utilisable pour le soudage côte à côte de viroles cylindriques de même diamètre, et dans ce cas, les viroles cylindriques placées bord à bord tournent au-dessous de la machine de soudage à mesure que l'opération de soudage s'effectue. La machine est aussi utilisable pour un soudage de tôles planes également placées bord à bord et défilant sous la torche de soudage 10 en restant placées toujours de manière que le joint entre les bords à souder reste toujours sous la torche.

A la figure 1, c'est une citerne cylindrique dont on cherche à souder deux éléments de virole.

On ne s'occupera pas pour la description de la présente invention de la constitution de la glissière 14. En effet, de telles glissières motorisées sont bien connues dans la technique du soudage de grosses pièces. D'autre part, on ne s'occupera pas ici de la possibilité que la glissière 14 soit capable de faire exécuter au châssis 12 et à la torche de soudage 10 un déplacement en direction des tôles à souder, c'est-à-dire perpendiculairement à la surface de ces tôles. En effet, le déplacement dans cette direction est toujours nécessaire et peut être réalisé soit par la même glissière comportant un autre moteur d'entraînement dans la direction perpendiculaire aux tôles, soit en prévoyant seulement que le bâti 16 représenté est lui-même mobile dans la direction perpendiculaire aux tôles. L'invention est concernée seulement par la présence d'une glissière 14 capable de déplacer la torche 10 en direction parallèle aux tôles et transversale à la direction de défilement du joint à souder.

D'autre part, on peut évidemment prévoir des moyens pour déplacer la torche de soudage 10 au-dessus des tôles plutôt que de prévoir que ce soient des tôles qui défilent au-dessous de la torche. Ces deux possibilités sont exactement équivalentes.

Comme on le voit encore sur la figure 1, on a fixé au-dessous du châssis 12 un détecteur optique 18 capable de distinguer la présence au-dessous de lui du joint à souder, par exemple grâce au contraste de luminance de la lumière réfléchie par le joint lui-même et la tôle plane qui l'entoure.

Le détecteur optique 18 est placé en amont de l'extrémité de la torche de soudage 10, dans le sens de défilement de la tôle représentée par la flèche 20, de sorte que si le détecteur 18 distingue à un moment donné la présence d'une partie de joint au-dessous de lui, ce sera toujours légèrement avant que cette partie de joint ne passe sous la torche.

Le détecteur 18 est plus précisément fixé à un chariot mobile 22 porté par une glissière 24 solidaire du châssis 12. Le chariot 22 est animé, grâce à un moteur 26, d'un mouvement alternatif dans une direction parallèle à la surface de la tôle au-dessous du détecteur et perpendiculaire à la direction générale de défilement du joint à souder ; le chariot 22 est donc animé d'un mouvement alternatif dans la même direction selon laquelle la torche de soudage 10 peut se déplacer grâce à la glissière 14 et les signaux de détection issus du détecteur 18 serviront justement à commander le moteur 15 d'entraînement du châssis 12 le long de la glissière 14.

Comme on l'expliquera plus loin, le mouvement du chariot 22 et donc du détecteur 18 est un mouvement de balayage alternatif régulier sur une faible distance (de l'ordre de 1 ou quelques centimètres), la distance de balayage étant choisie simplement suffisante pour couvrir toute la surface sur laquelle le joint à souder peut se déplacer par suite de fluctuations de la linéarité de son défilement.

Au contraire, la glissière 14 peut être notablement plus étendue, et permettre donc un déplacement important du châssis 12 si on le désire, par exemple pour permettre un positionnement initial de la torche à des emplacements qui peuvent varier selon les opérations de soudage à effectuer. Cette possibilité n'est cependant pas impérative si d'autres moyens sont prévus pour effectuer ce positionnement initial.

Aux figures 2 et 3, on voit encore respectivement en vue de face et en vue de dessus, la torche 10 portée par le châssis support 12, la glissière transversale 14, le moteur d'entraînement correspondant 15, le bâti 16, le détecteur optique 18 monté sur son chariot mobile 22 et entraîné en mouvement alternatif régulier par le moteur 26, et enfin deux tôles 28 et 30 réunies bord à bord le long d'un joint à souder 32, les tôles défilant dans la direction des flèches 20 qui est aussi la direction du joint à souder 32.

A la figure 3, on a encore représenté en pointillé, avec la référence 33, le dessin du trajet relatif du détecteur 18 par rapport aux tôles 28 et 30 : ce trajet est triangulaire puisque le détecteur 18 est entraîné en mouvement de balayage alternatif régulier et que les tôles défilent à vitesse constante sous le détecteur.

Comme on le voit, le détecteur croise régulièrement le trajet du joint à souder et fournit à chaque fois une impulsion. Il est prévu aussi, coopérant avec le chariot 22, un autre détecteur capable de fournir une impulsion à chaque fois que le détecteur 18 passe dans l'axe de la torche 10. Ce détecteur peut être un détecteur mobile porté par le chariot et coopérant avec un organe fixe par rapport au châssis support 12. Ce peut être aussi un détecteur fixe coopérant avec une partie solidaire du chariot 22. Ce deuxième détecteur peut être optique ou non, en particulier il peut être constitué par le détecteur 18 lui-même dans certains cas, à condition qu'il puisse fournir une impulsion distincte de l'impulsion fournie lors du passage au-dessus du joint à souder. Dans la suite, on appellera le deuxième détecteur capteur de référence car il délivre un signal à chaque fois que le détecteur 18 passe à une position de référence qui est dans l'axe de la torche 10 (axe pris dans la direction de défilement des tôles à souder).

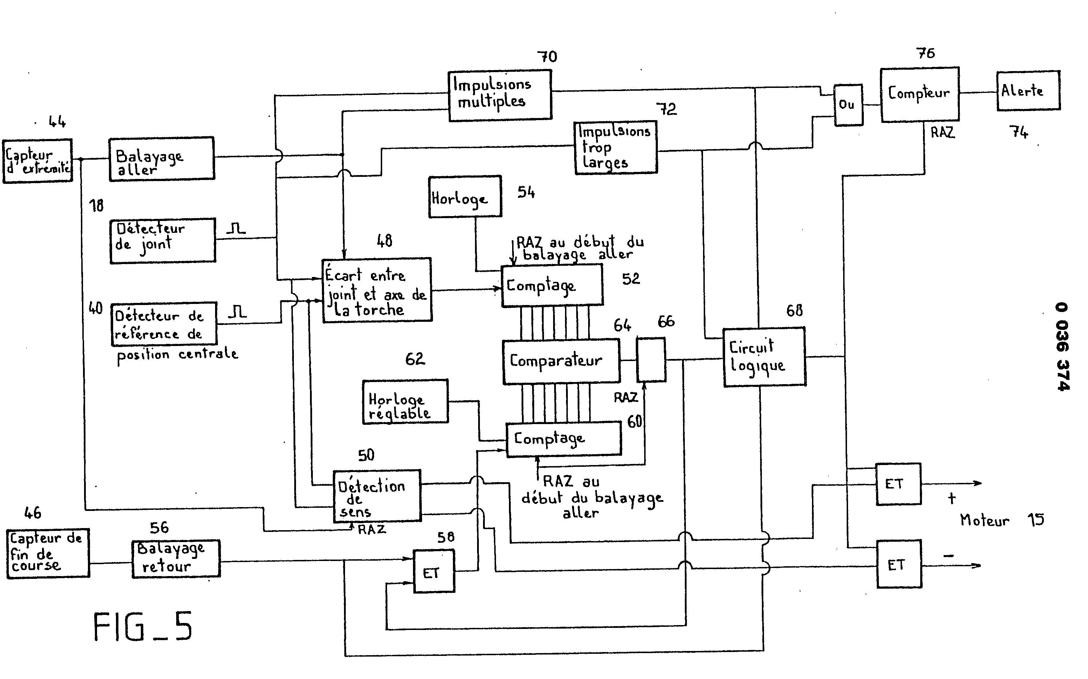

A la figure 4, on a représenté un exemple de réalisation d'un chariot mobile portant un détecteur de joint. Le châssis support portant la torche de soudage est encore désigné par la référence 12.

En dessous de ce châssis support 12 et en avant de la torche de soudage 10 est fixée une glissière motorisée 24 s'étendant parallèlement à la direction des tôles à souder 28 et 30 et perpendiculairement à la direction du joint à souder 32. Cette glissière porte le chariot mobile 22 qui subit un mouvement alternatif régulier grâce à un entraînement au moyen d'un moteur 26 agissant sur une came 34 et grâce à un ressort de rappel 36 du chariot qui ramène ce dernier vers la gauche de la figure chaque fois que la came ne repousse pas le chariot vers la droite. La came 34 est dessinée de manière que le mouvement de rotation imprimé par le moteur 26 se transforme en mouvement alternatif régulier du chariot.

Le chariot porte à une extrémité un bras vertical de support 38 s'étendant vers le bas en direction des tôles à souder et portant lui-même à son extrémité le détecteur optique 18 qui se trouve donc immédiatement en regard de la tôle et oscille autour du joint 32.

Le capteur de référence dont on a parlé ci-dessus, qui détermine l'instant où le détecteur 18 passe dans l'axe de la torche 10 a été figuré schématiquement sous la référence 40 qui représente un organe porté par le châssis support 16 et coopérant avec un ergot 42 solidaire du chariot 22 pour délivrer un signal quand l'ergot 42 passe devant l'organe 40.

Il est prévu également deux capteurs supplémentaires, respectivement 44 et 46, qui peuvent aussi coopérer avec l'ergot 42, et qui délivrent respectivement un signal indiquant que le chariot est au début de son trajet aller (détecteur 44) et au début de son trajet retour (détecteur 46). Ces détecteurs peuvent être des microinterrupteurs de fin de course.

Les détecteurs de début de balayage aller et retour 44 et 46 servent à l'initialisation de différentes étapes du traitement électrique des signaux issus des détecteurs 18 et 40, notamment pour effectuer une vérification de la position de la torche de soudage 10 à chaque balayage du chariot 22, et aussi pour décomposer ce traitement en une étape de mesure de position pendant le trajet aller du balayage du chariot, et une étape de repositionnement de la torche 10 pendant le trajet retour de balayage du chariot. Les détecteurs 40, 44 et 46 qui donnent seulement des informations de référence de la position du chariot par rapport à des points fixes du châssis support de la torche peuvent aussi bien être montés sur le chariot, ou même peuvent coopérer avec la came 34 ou d'autres parties liées au moteur d'entraînement du chariot.

On va maintenant décrire en référence à la figure 5 les circuits de traitement effectuant la commande de repositionnement de la torche à chaque instant en fonction des indications de la cellule de détection de joint 18.

Cette cellule fournit des impulsions chaque fois qu'elle passe au-dessus du joint. Le détecteur de référence 40 fournit également des impulsions chaque fois que la cellule 18 passe dans l'axe de la torche 10, c'est-à-dire en pratique chaque fois que le chariot 22 est au milieu de sa course. Un circuit 48 reçoit ces impulsions et établit un créneau de durée correspondant à l'intervalle entre les impulsions issues de ces deux détecteurs 18 et 40, et un circuit 50 reçoit également ces impulsions et produit à sa sortie un signal indiquant quel est le sens d'apparition des impulsions.

On notera que les circuits 48 et 50 ne fonctionnent ainsi que pendant le trajet aller du balayage du chariot de sorte qu'il n'y a pas d'ambiguïté sur le sens de déplacement à donner à la torche une fois qu'on a déterminé le sens d'apparition des impulsions issues des détecteurs 18 et 40. Notamment, le circuit de détection de sens est remis à zéro au début de chaque balayage aller du détecteur, grâce au capteur de fin de course 44 mentionné en référence à la figure 4.

Le créneau engendré par le circuit 48 pendant l'intervalle entre les impulsions sert à débloquer l'entrée de comptage d'un compteur 52 qui reçoit des impulsions à fréquence élevée d'une horloge 54 après avoir également été remis à zéro au début du trajet aller du chariot.

A la fin du créneau, le comptage est arrêté et le contenu du compteur reste mémorisé ; il représente un nombre correspondant à l'écart entre les impulsions. Le capteur 46 (figure 4) de fin de trajet aller du chariot fournit une impulsion mémorisée dans un circuit 56 pendant tout le trajet de balayage retour pour ouvrir une porte ET 58 et autoriser le comptage, dans un compteur 60, d'impulsions à fréquence élevée issues d'une horloge 62 à fréquence réglable. Le compteur 60, remis à zéro au début du balayage aller, compte jusqu'à ce que son contenu soit identique à celui du compteur 52. Un comparateur 64 détecte cette identité et bloque alors le comptage du compteur 60 en fermant la porte ET 58 dont une entrée est reliée à la sortie du comparateur 64.

La sortie du comparateur 64, à travers une bascule de mémorisation 66 et un circuit logique 68, commande l'application de courant au moteur ou aux moteurs 15 d'entraînement de la torche 10, avec un sens déterminé par le circuit de détection de sens d'impulsions 50. Un moteur est donc entraîné et entraîne la torche depuis le début du balayage retour du chariot et tant que les contenus des compteurs 52 et 60 ne sont pas identiques. Dès que le compteur 60 a atteint le contenu du compteur 52, le comparateur change d'état, la bascule 66 change également d'état et arrête le comptage en même temps qu'elle arrête les moteurs.

Le circuit logique 68 qui plus précisément commande l'application de courant au moteur n'autorise cette application que pendant le balayage de retour du chariot et reçoit à cet effet la sortie de la mémoire 56 reliée au capteur de fin de course 46.

Le circuit logique 68 n'autorise également cette application de courant que si une seule impulsion de détection de joint a été émise pendant le trajet aller du balayage, et que si l'impulsion avait une largeur suffisamment faible. Un circuit de détection d'impulsions multiples 70 et un circuit de détection d'impulsions trop larges 72 reçoivent donc les signaux issus du détecteur de joint 18 et inhibe le circuit logique 68 dans les autres cas.

Ces deux circuits présentent tout leur intérêt pour éviter que la torche ne se positionne en fonction de la détection d'autres choses qu'un joint à souder, par exemple en fonction de rayures de la tôle, ou d'autres défauts tels qu'une trop grande largeur du joint à un endroit donné.

On peut prévoir encore un circuit d'alerte 74 capable de délivrer un signal d'alarme lumineux ou sonore si pendant plusieurs trajets successifs du chariot de balayage des impulsions multiples ont été détectées, ou encore des impulsions trop larges, car la succession de tels défauts est vraisemblablement l'indice d'un défaut majeur dans l'opération de soudage, défaut qu'il faut corriger avant de poursuivre l'opération. Un compteur 76 est donc prévu pour enregistrer le nombre de fois successives où des défauts sont détectés. Ce compteur 76 est remis à zéro par l'apparition de signaux normaux d'autorisation de fonctionnement du moteur 15, signaux apparaissant en sortie du circuit logique 68.

On aura compris d'après ce qui précède le fonctionnement du système de repositionnement selon l'invention qui s'effectue à chaque cycle de balayage du chariot. Au début du balayage, le capteur 44 fournit une impulsion qui initialise tout le système et qui, en particulier, remet à zéro les compteurs 52 et 60 ainsi que la bascule 66 en sortie du comparateur 64 de sorte que le circuit logique 68 est prêt à donner une instruction de fonctionnement du moteur 15, ce qu'il ne fera cependant que lorsqu'il recevra à cet effet une instruction d'autorisation du capteur de fin de course 46 indiquant que le balayage aller est terminé et que le balayage retour commence.

Pendant le début du balayage aller, les compteurs 52 et 60 restent à zéro, et d'ailleurs le compteur 60 reste à zéro pendant toute la durée du balayage aller.

Dès le début de l'apparition de l'impulsion du détecteur de joint 18 ou de l'impulsion du détecteur de référence 40, le compteur 52 commence à compter, et il ne s'arrête qu'à l'apparition du début de l'impulsion de l'autre détecteur. Le contenu du compteur est alors représentatif de l'écart entre les deux impulsions et ne dépend pas du sens de ces impulsions puisque ce sens est détecté par le détecteur 50 qui garde en mémoire le sens pendant tout le trajet de balayage aller et retour du chariot.

Si une impulsion trop large du détecteur de joint est détectée, le circuit logique 68 est inhibé pendant tout le reste du trajet de balayage aller et retour du chariot. De même, si les impulsions multiples sont détectées par le circuit 70, le circuit logique est encore inhibé pendant tout le reste du trajet aller et retour du chariot. Dans ces deux cas, il n'y aura pas de mise en marche du moteur 15 lors du retour du chariot.

Dès que le chariot atteint l'extrémité de son trajet aller, détecté par le capteur de fin de course 46, le circuit logique 68 autorise normalement l'application d'un courant au moteur, avec un sens déterminé par le circuit de détection de sens 50.

En même temps, le compteur 60 commence à compter à une fréquence déterminée par l'horloge réglable 62, et ces deux opérations, avance du moteur et comptage du compteur 60, se poursuivent jusqu'à ce que le comparateur 64 indique que le compteur 60 a atteint le contenu du compteur 52. Le comparateur 64 fait alors basculer la bascule 66 et agit sur le circuit logique pour arrêter le moteur d'entraînement de la torche et sur la porte ET 58 pour arrêter le comptage du compteur 60.

On comprend ainsi que la torche est avancée d'une quantité proportionnelle à son écart par rapport au joint, et bien entendu dans une direction correspondant à une direction de cet écart dans une direction correspondant à une réduction de cet écart. Le coefficient de proportionnalité est déterminé par la vitesse d'avance des moteurs et par la fréquence réglable de l'horloge 62, fréquence que l'on peut choisir relativement élevée si on veut assurer une rapidité élevée de repositionnement de la torche, et qu'on peut choisir plus faible si on veut assurer un repositionnement plus lent mais plus convergent et sans risque de dépassement ou de pompage de l'asservissement.

Après l'arrêt du moteur par le circuit logique, le circuit reste dans son état et plus rien ne se passe jusqu'à la réinitialisation de l'ensemble lorsque le chariot arrive en fin de course retour et recommence un nouveau balayage.

Le pas des informations prises sur le joint à souder est fonction d'une part de la fréquence de balayage et de la vitesse de soudage (vitesse de défilement de la tôle).

On aura donc toute latitude pour choisir la fréquence de balayage pour autant que les temps de balayage aller et retour soient compatibles avec le bon fonctionnement de l'ensemble de traitement.

Par exemple une vitesse de soudage de l'ordre de 1 cm/s et une fréquence de balayage d'un aller et retour par seconde donnera une information de la position du joint à chaque centimètre parcouru. Suivant le type d'assemblage à exécuter (ligne droite théorique ou éventuellement ligne courbe théorique) on choisira d'augmenter ou diminuer la fréquence de balayage pour augmenter ou diminuer le nombre d'informations par centimètre parcouru.

On veillera à réduire au minimum le décalage entre la prise d'information (capteur) et la torche.

Le montage représenté à la figure 5 comporte deux compteurs 52 et 60 et un comparateur 64 qui détectent l'égalité de leurs contenus. Ce montage pourrait bien entendu être remplacé par un montage équivalent dans lequel on aurait simplement un compteur-décompteur unique avec une entrée de comptage provenant du circuit 48 et une entrée de décomptage provenant du circuit 58 avec des horloges différentes pour le comptage et le décomptage, et avec un décodeur en sortie du compteur-décompteur pour repérer le passage par zéro du contenu du compteur ; ce décodeur servait à commander le circuit logique 68.

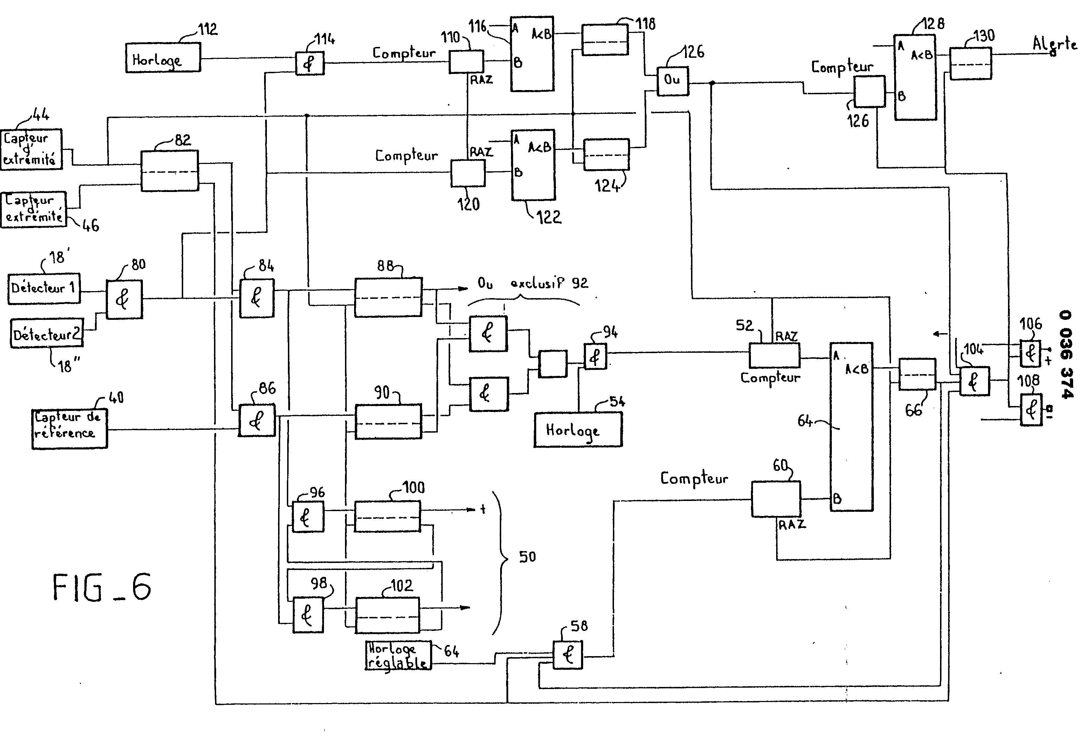

La figure 6 représente enfin un circuit détaillé correspondant au schéma de la figure 5 et capable de remplir toutes les fonctions indiquées dans la description qui précède.

Le détecteur 18 est en fait constitué ici par deux détecteurs optiques 18' et 18", placés l'un derrière l'autre en alignement avec la torche, avec une porte ET 80 jouant le rôle de circuit de coïncidence et permettant de ne délivrer une impulsion de sortie que si les deux détecteurs 18' et 18" passent à la fois au-dessus du joint. L'impulsion de sortie du circuit 18 est une impulsion correspondant à la partie commune des impulsions issues des détecteurs individuels 18' et 18". On élimine ainsi des défauts ponctuels des bords des tôles à souder.

Des interrupteurs constituant le capteur d'extrémité 44 et le capteur d'extrémité 46 sont tous deux connectés aux entrées d'une bascule 82 formant mémoire, cette bascule ayant deux sorties à des niveaux logiques complémentaires définissant l'un le moment de balayage aller du chariot et l'autre le moment de balayage retour. La bascule 82 change d'état à chaque fois qu'elle est actionnée par l'un des capteurs 44 et 46.

Le circuit d'établissement d'un créneau débutant à l'apparition de l'impulsion du détecteur de joint 18 et finissant à l'apparition de l'impulsion du capteur de référence 40 comprend deux portes ET 84 et 86 ayant chacune une entrée reliée à la sortie de la bascule 82 et une autre entrée reliée respectivement au détecteur 18 et au détecteur 40, les portes ET 84 et 86 étant là pour faire en sorte que la mesure ne s'effectue que pendant le trajet aller du chariot mobile.

Les sorties des portes ET 84 et 86 sont connectées d'une part à des bascules 88 et 90 respectivement jouant le rôle de mémoires, et d'autre part au circuit de détection de sens 50. La sortie des bascules 88 et 90 est reliée à un ensemble de portes logiques destinées à établir le créneau désiré. Ces portes logiques forment en réalité un OU exclusif 92.

La sortie du circuit OU exclusif 92 est connectée à une entrée d'une porte ET 94 dont l'autre entrée reçoit des signaux de l'horloge 54 et dont la sortie est couplée à l'entrée de comptage du compteur 52 qui compte donc à la fréquence de l'horloge 54 pendant toute la durée du créneau engendré entre l'apparition de l'impulsion issue du détecteur de joint et de l'impulsion issue du capteur de référence 40.

Le détecteur de sens 50 comporte deux portes ET 96 et 98 bouclées respectivement l'une sur l'autre par des bascules 100 et 102, le bouclage étant tel que les bascules sont verrouillées dans un premier état si la première impulsion apparaît à l'entrée de la porte ET 96 et dans un second état si la première impulsion apparaît à l'entrée de la porte ET 98.

L'autre compteur 60 reçoit des impulsions de l'horloge réglable 62 par l'intermédiaire de la porte ET 58 qui reçoit sur une première entrée la sortie de l'horloge réglable, sur une deuxième entrée une sortie de la bascule 82 indiquant que le chariot en est à son trajet de retour, et une troisième entrée reliée à la bascule 66 de sortie du comparateur 64 et indiquant que le contenu du compteur 60 n'a pas encore atteint le contenu du compteur 52.

Comme on peut le voir, la sortie de la bascule 66 est reliée à une entrée d'une porte ET 104 dont une seconde entrée est reliée à une sortie de la bascule 82 pour autoriser l'ouverture de la porte 104 pendant le trajet retour seulement du chariot ; la porte ET 104 comporte une troisième entrée reliée aux circuits de détection d'impulsions multiples et trop larges pour empêcher l'ouverture de la porte 104 lorsqu'une impulsion trop large ou plusieurs impulsions ont été détectées pendant le trajet aller du chariot. On peut prévoir aussi une quatrième entrée de la porte 104, cette entrée étant reliée à la sortie de la bascule 88 (qui est déclenchée par l'apparition d'une impulsion de détection de joint) de sorte que le circuit de commande du moteur reste bloqué si aucune impulsion de détection de joint n'est apparue pendant le trajet aller du balayage du chariot.

La sortie de la porte 104 est connectée à une entrée d'une première porte ET 106 et à une entrée d'une seconde porte ET 108 dont les autres entrées sont connectées aux deux sorties du circuit de détection de sens de sorte que lorsque la porte 104 laisse passer un signal, c'est soit la porte 106 soit la porte 108 qui fournit elle-même un signal de commande au moteur selon l'état du circuit 50 de détection de sens d'apparition des impulsions.

Les sorties des portes 106 et 108 peuvent être connectées chacune à un relais provoquant l'alimentation du moteur d'entraînement de la torche respectivement dans un sens ou dans l'autre.

Le circuit de détection des impulsions trop larges comprend essentiellement un compteur 110 qui reçoit des impulsions d'une horloge 112 qui peut être en réalité l'horloge 54, à travers une porte ET 114 qui n'est ouverte que pendant la durée de l'impulsion issue du détecteur 18. Le compteur 110 compte donc pendant toute la durée de cette impulsion et son contenu est comparé, dans un comparateur 116 à une valeur fixe. La sortie du comparateur 116 fait basculer une bascule 118 lorsque le contenu du compteur 110 a dépassé le seuil. La remise à zéro du compteur 110 et de la bascule 118 se fait par le capteur d'extrémité 44 au début de chaque trajet aller du chariot. La sortie de la bascule 118 sert à bloquer, par l'entrée de la porte 104, l'alimentation du moteur d'entraînement de la torche.

Le circuit de détection des impulsions multiples au cours d'un trajet aller du chariot est constitué par un compteur 120 qui reçoit directement les impulsions issues du détecteur de joint 18, le contenu du compteur 120 étant comparé dans un comparateur 122 à un nombre fixe (par exemple 2), et le comparateur 122 fait basculer une bascule 124 en cas de dépassement de ce nombre. La sortie de la bascule 124 sert également à bloquer la porte 104 et donc l'alimentation du moteur d'entraînement de la torche. On peut prévoir par exemple un circuit OU 126 dont les entrées sont respectivement connectées à la bascule 118 et à la bascule 124 et dont la sortie est connectée à la porte 104 pour empêcher le fonctionnement du moteur soit dans le cas d'impulsions multiples soit dans le cas d'impulsions trop larges. Le compteur 120 et la bascule 124 sont également remis à zéro seulement lors du début du trajet aller du chariot mobile.

Finalement, il est prévu un circuit d'alerte comportant un compteur 126 relié à la sortie de la porte OU 126 pour compter le nombre de fois successives où un défaut est constaté (impulsion trop large ou impulsions multiples) et pour comparer dans un comparateur 128 ce nombre à un nombre prédéterminé. La sortie du comparateur 128 fait basculer dans ce cas une bascule 130 qui déclenche une alerte. La bascule 130 et le compteur 126 peuvent être remis à zéro par la sortie de la porte 104, c'est-à-dire dès que le circuit fonctionne une fois normalement, le compteur de défauts successifs 126 est remis à zéro et c'est seulement dans le cas ou plusieurs défauts successifs sont constatés qu'une alerte est donnée.

## Revendications

1. Procédé de soudage avec positionnement automatique d'une torche de soudage (10) en regard d'un joint (32) entre deux tôles à souder (28, 30) consistant à :
— faire exécuter une oscillation alternative régulière à un détecteur de joint (18) monté à l'avant de la torche et mobile dans une direction transversale à la direction générale du joint, le détecteur fournissant des impulsions de position du joint,
— établir une mesure de position du joint à partir desdites impulsions, et
— déplacer la torche transversalement au moyen d'un moteur en réponse à ladite mesure pour positionner la torche en regard du joint, caractérisé par le fait que :

— le détecteur (18) est un détecteur optique fixé à un chariot (22) monté coulissant à l'avant de la torche (10) pour faire exécuter au détecteur un balayage alternatif transversal à la direction générale du joint (32), le détecteur fournissant une impulsion au moment de son passage au-dessus du joint,

— ladite mesure est une mesure de l'écart temporel entre l'instant d'apparition de cette impulsion et le moment de passage du détecteur (18) dans l'axe de la torche (10) dans la direction générale d'avance de l'opération de soudage, et

— le déplacement transversal de la torche en réponse à ladite mesure s'effectue dans un sens correspondant à une réduction dudit écart temporel.

2. Procédé selon la revendication 1, caractérisé par le fait que la mesure de l'écart temporel est effectuée et enregistrée pendant un trajet aller du détecteur optique (18), et que le déplacement de la torche de soudage (10) est effectué pendant le trajet de retour du chariot (22).

3. Appareil de soudage avec positionnement automatique d'une torche de soudage (10) en regard d'un joint (32) entre deux tôles à souder (28, 30) comprenant au moins une glissière transversale (14) de guidage de la torche (10), un moteur d'entraînement (15) pour déplacer la torche (10) transversalement par rapport à la direction générale du joint (32), un détecteur de joint (18) monté à l'avant de la torche et soumis à une oscillation alternative régulière dans une direction transversale à la direction générale du joint, le détecteur fournissant des impulsions de position du joint (32) un circuit de mesure (48) pour établir une mesure de position à partir desdites impulsions, et un circuit de commande (68) couplé au circuit de mesure et apte à agir sur le moteur d'entraînement (15) de la torche pour positionner la torche en regard du joint, caractérisé par le fait qu'il est prévu, monté sur glissière fixée sur la torche, un chariot (22) mobile par rapport à la torche, également dans une direction transversale à la direction générale du joint à souder et parallèlement à la surface des tôles, avec un moyen (26) pour entraîner le chariot en mouvement alternatif régulier, le chariot portant un moyen de détection optique (18) du joint, apte à fournir une impulsion électrique lorsqu'il passe au-dessus du joint, un capteur de détection (40) d'une position centrale de référence étant prévu pour fournir une impulsion lorsque le moyen de détection optique (18) passe dans l'axe de la torche, et par le fait que le circuit de mesure (48) est apte à établir une mesure algébrique du décalage temporel entre les deux impulsions à chaque cycle de balayage du chariot mobile (22), et que le circuit de commande (68) couplé au circuit de mesure (48) est apte à agir sur le moteur (15) d'entraînement de la torche (10) dans un sens tendant à réduire ce décalage temporel.

4. Appareil selon la revendication 3, caractérisé par le fait que le circuit de mesure (48) comprend un circuit de détection (50) du sens de décalage entre les impulsions issues du moyen de détection optique (18) de joint et du capteur de référence (40), et un compteur (52) recevant d'une horloge (54) des impulsions à fréquence élevée et comptant ces impulsions pendant l'intervalle de temps entre l'apparition des impulsions fournies par les moyens de détection (18), le contenu du compteur (52) représentant une mesure dudit décalage temporel.

5. Appareil selon la revendication 4, caractérisé par le fait que le circuit de commande (68) comprend un autre compteur (60) recevant également des impulsions à fréquence élevée et un comparateur (64) pour comparer les comptes des deux compteurs (52, 60) et un ensemble de portes logiques recevant le signal du comparateur (64) et celui du circuit de détection de sens (50) pour autoriser l'application d'un courant au moteur (15) d'entraînement latéral de la torche pendant le trajet retour du chariot (22) tant que les contenus des compteurs (52, 60) ne sont pas identiques.

6. Appareil selon la revendication 5, caractérisé par le fait que l'autre compteur (60) reçoit des impulsions à fréquence élevée d'une autre horloge (62), à fréquence ajustable pour régler la convergence du rapprochement de la torche vers le joint à souder.

7. Appareil selon l'une des revendications 4 à 6, caractérisé par le fait qu'il est prévu un capteur de détection de l'extrémité aller (44) et de l'extrémité retour (46) du trajet du chariot mobile (22) pour déclencher le fonctionnement et la remise à zéro du circuit de commande (68) du moteur (15), ainsi que le fonctionnement et la remise à zéro du circuit de mesure (48).

8. Appareil selon l'une des revendications 3 à 7, caractérisé par le fait qu'il est prévu un moyen (72) de détection de la largeur d'impulsion de sortie du détecteur de joint, et un moyen pour interdire l'actionnement du moteur (15) par le circuit de commande (68) si l'impulsion a une largeur plus grande qu'un seuil prédéterminé réglable.

9. Appareil selon l'une des revendications 3 à 8, caractérisé par le fait qu'il est prévu un compteur (70) du nombre d'impulsions émises par le détecteur de joint (18) pendant un trajet aller du chariot mobile (22), et un moyen pour interdire l'actionnement du circuit de commande (68) si le nombre d'impulsions est supérieur à un nombre prédéterminé.

10. Appareil selon l'une des revendications 8 et 9, caractérisé par le fait qu'il est prévu un compteur (76) pour compter le nombre de trajets successifs du chariot (22) pendant lesquels l'actionnement du circuit de commande (68) du chariot a été interdit, et pour donner un signal d'alerte au-dessus d'un nombre prédéterminé.

## Claims

1. Method of welding with automatic positioning of a welding torch (10) in respect of a welding joint (32) between two plates (28, 30) consisting in the steps of :

— imparting a regular alternating oscillation to a joint detector (18) mounted in front of the torch and movable in a direction transverse to the general direction of the joint, the detector furnishing joint position impulses,

— establishing a measurement of the position of the joint from the said impulses, and

— displacing the torch transversely by means of a motor in response to the said measurement for positioning the torch in respect of the joints, characterised by the fact that :

— the detector (18) is an optical detector fixed on a head (22) mounted slidingly in front of the torch (10) for imparting to the detector an alternating sweep transverse to the general direction of the joint (32), the detector furnishing an impulse at the moment of its passage above the joint,

— the said measurement is a measurement of the time interval between the instant of the appearance of this impulse and the moment of passage of the detector (18) into the axis of the torch (10) in the general direction of advance of the welding operation and

— the transverse displacement of the torch in response to the said measurement is effected in a sense corresponding to a reduction of the said time interval.

2. Method according to claim 1, characterised by the fact that the measurement of the time interval is effected and registered during an outwards movement of the optical detector (18), and in that the displacement of the welding torch (10) is effected during a return movement of the head (22).

3. Apparatus for welding with automatic positioning of a welding torch (10) in respect of a welding joint (32) between two plates (28, 30) comprising at least one transverse slide (14) for guiding the torch (10), a drive motor (15) for displacing the torch (10) transversely with respect to the general direction of the joint (32), a joint detector (18) mounted in front of the torch and subjected to a regular alternating oscillation in a direction transverse to the general direction of the joint, the detector furnishing joint (32) position impulses, a measuring circuit (48) for establishing a measurement of the position from the said impulses, and a command circuit (68) coupled to the measuring circuit and adapted to act on the drive motor (15) of the torch for positioning the torch in respect of the joint, characterised by the fact that there is provided, mounted on a slide fixed on the torch, a head (22) movable with respect to the torch, also in a direction transverse to the general direction of the soldering joint and parallel to the surface of the plates, with means (26) for driving the head in regular alternating movement, the head having a means of optical detection of the joint, adapted to furnish an electric impulse whilst it passes over the joint, a pick-up (40) for detecting a central reference position being provided for furnishing an impulse whilst the means of optical detection (18) passes into the axis of the torch, and by the fact that the measuring circuit (48) is adapted to establish an algebraic measurement of the time lag between two impulses at each cycle of sweeping of the movable head (22), and in that the command circuit (68) coupled to the measuring circuit (48) is adapted to act on the drive motor (15) of the torch (10) in a sense tending to reduce the time lag.

4. Apparatus according to claim 3, characterised by the fact that the measuring circuit (48) comprises a detection circuit (50) of the time lag sense between the impulses from the means (18) of optical detection of the joint and of the reference pick-up (40) and a counter (52) receiving from a clock (54) impulses at high frequency and counting these impulses during the time interval between the appearance of impulses furnished by the detection means (18), the content of the counter (52) representing a measure of the said time lag.

5. Apparatus according to claim 4, characterised by the fact that the command circuit (68) comprises another counter (60) also receiving impulses at high frequency and a comparator (64) for comparing the counts of the two counters (50, 62) and an assembly of logic gates receiving the signal of the comparator (64) and that of the sense detecting circuit (50) for authorising the application of current to the motor (15) for lateral driving of the torch during the return movement of the head (22) whilst the contents of the counters (52, 60) are not identical.

6. Apparatus according to claim 5, characterised by the fact that the other counter (60) receives impulses at high frequency from another clock (62), at adjustable frequency for regulating the approaching convergence of the torch towards the welding joint.

7. Apparatus according to any one of claims 4 to 6, characterised by the fact that there is provided a detection pick-up for the end of travel (44) and for the end of return (46) of the movable head (22) for disconnecting the functioning and the return to zero of the command circuit (68) of the motor (15), as well as the functioning and the return to zero of the measuring circuit (48).

8. Apparatus according to any one of claims 3 to 7, characterised by the fact that there is provided means (72) of detection of the size of impulse from the joint detector, and means for preventing the actuation of the motor (15) by the command circuit (68) if the impulse has a size greater than a predetermined regulatable threshold.

9. Apparatus according to any one of claims 3 to 8, characterised by the fact that there is provided a counter (70) of the number of impulses emitted by the joint detector (18) during travel of the movable head (22), and means for preventing functioning of the command circuit (68) if the number of impulses is greater than a predetermined number.

10. Apparatus according to either of claims 8 and 9, characterised by the fact that there is provided a counter (76) for counting the number of successive travels of the head (22) during which the functioning of the command circuit (68) of the head has been prevented, and for giving an alarm signal above a predetermined number.

**Ansprüche**

1. Schweißverfahren mit automatischer Positionierung eines Schweißbrenners (10) in bezug auf eine zwischen zwei Blechen (28, 30) zu schweißende Verbindung (32), bei dem
— ein Verbindungsabtaster (18), der vor dem Schweißbrenner befestigt und in Querrichtung zu der allgemeinen Richtung der Verbindung bewegbar ist, eine regelmäßige Hin- und Herbewegung ausführt, wobei der Abtaster Impulse der Lage der Verbindung abgibt,
— eine Positionsmessung der Verbindung aufgrund dieser Impulse erstellt wird, und
— der Brenner mittels eines Motors auf die Messung ansprechend verschoben wird, um den Brenner in bezug auf die Verbindung zu positionieren,
dadurch gekennzeichnet, daß
— der Abtaster (18) ein optischer Abtaster ist, der an einem Wagen (22) befestigt ist, welcher verschiebbar vor dem Brenner (10) angeordnet ist, damit der Abtaster eine Hin- und Herabtastung quer zu der allgemeinen Richtung der Verbindung (32) durchführen kann, wobei der Abtaster einen Impuls zum Zeitpunkt seines Überganges über die Verbindung abgibt, daß die Messung eine zeitliche Abstandsmessung zwischen dem Zeitpunkt des Auftretens dieses Impulses und dem Zeitpunkt des Durchganges des Abtasters (18) durch die Achse des Brenners (10) in der allgemeinen Vorwärtsrichtung des Schweißvorganges ist, und
— die Querverschiebung des Brenners im Ansprechen auf die Messung in dem Sinn durchgeführt wird, der einer Verringerung des zeitlichen Abstandes entspricht.

2. Verfahren nach Anspruch 1, dadurch gekennzeichnet, daß die Messung des zeitlichen Abstandes während der Vorwärtsbewegung des optischen Abtasters (18) durchgeführt und aufgezeichnet wird und daß die Verschiebung des Schweißbrenners (10) während der Rückbewegung des Wagens (22) erfolgt.

3. Schweißvorrichtung mit automatischer Positionierung eines Schweißbrenners (10) in bezug auf die zwischen zwei Blechen zu schweißende (28, 30) Verbindung (32), mit wenigstens einer querverlaufenden Führungslaufschiene (14) für den Brenner (10), einem Antriebsmotor (15) zum Verschieben des Brenners (10) in Querrichtung in bezug auf die allgemeine Richtung der Verbindung (32), einem Verbindungsabtaster (18), der vor dem Brenner angeordnet und einer regelmäßigen Hin- und Herbewegung in einer zu der allgemeinen Richtung der Verbindung querverlaufenden Richtung ausgesetzt ist, wobei der Abtaster Impulse der Lage der Verbindung (32) liefert, einem Meßschaltkreis (48), um eine Messung der Lage aufgrund dieser Impulse zu erstellen, und einem Steuerschaltkreis (68), der mit dem Meßschaltkreis gekoppelt ist und auf den Antriebsmotor (15) des Brenners zur Positionierung des Brenners in bezug auf die Verbindung wirken kann, dadurch gekennzeichnet, daß vorgesehen sind ein Wagen (22), der an einer an dem Brenner befestigten Laufschiene in bezug auf den Brenner ebenfalls in einer zu der allgemeinen Richtung der zu schweißenden Verbindung und parallel zu der Oberfläche der Bleche bewegbar ist, mit einer Einrichtung (26), um den Wagen mit einer gleichmäßigen Hin- und Herbewegung anzutreiben, wobei der Wagen eine optische Erfassungseinrichtung (18) für die Verbindung trägt, die beim Übergang über die Verbindung einen elektrischen Impuls abgibt, sowie einen Erfassungsfühler (40) für eine mittlere Bezugslage, um einen Impuls abzugeben, wenn die optische Erfassungseinrichtung (18) durch die Achse des Brenners hindurchgeht, daß der Meßschaltkreis (48) eine algebraische Messung des zeitlichen Abstandes zwischen zwei Impulsen bei jedem Abtastzyklus des bewegbaren Wagens (22) durchführen kann, und daß der mit dem Meßschaltkreis (48) gekoppelte Steuerschaltkreis (68) auf den Antriebsmotor (15) des Brenners (10) in einem Sinn einwirken kann, in dem der zeitliche Abstand verringert wird.

4. Vorrichtung nach Anspruch 3, dadurch gekennzeichnet, daß der Meßschaltkreis (48) einen Erfassungsschaltkreis (50) für den Sinn des Abstandes zwischen den Impulsen, die von der optischen Erfassungseinrichtung (18) für die Verbindung und die Bezugserfassungseinrichtung (40) erzeugt werden, und einen Zähler (52) umfaßt, der von einem Taktgeber (54) Impulse mit einer höheren Frequenz erhält und diese Impulse während des Zeitintervalls zwischen dem Auftreten der von der Erfassungseinrichtung (18) erzeugten Impulse zählt, wobei der Inhalt des Zählers (52) eine Messung des zeitlichen Abstandes darstellt.

5. Vorrichtung nach Anspruch 4, dadurch gekennzeichnet, daß der Steuerschaltkreis (68) einen weiteren Zähler (60), der ebenfalls Impulse mit einer höheren Frequenz erhält, einen Vergleichsschaltkreis (64) zum Vergleichen der Inhalte der zwei Zähler (52, 60) und eine Anordnung von logischen Toren umfaßt, die das Signal der Vergleichsschaltung (64) und dasjenige des Schaltkreises zum Feststellen des Sinnes (50) erhält, um die Stromversorgung des Motors (15) zum seitlichen Antrieb des Brenners während der Rückbewegung des Wagens (22) freizugeben, solange die Inhalte der Zähler (52, 60) nicht identisch sind.

6. Vorrichtung nach Anspruch 5, dadurch gekennzeichnet, daß der weitere Zähler (60) Impulse höherer Frequenz von einem anderen Taktgeber (62) erhält, dessen Frequenz einstellbar ist, um die Annäherungskonvergenz des Brenners zu der zu schweißenden Verbindung einzustellen.

7. Vorrichtung nach einem der Ansprüche 4 bis 6, dadurch gekennzeichnet, daß ein Fühler (44) für das Ende der Hinbewegung und für das Ende der Rückbewegung (46) des bewegbaren Wagens (22) vorgesehen ist, um den Betrieb und das Zurücksetzen des Steuerschaltkreises (68) des Motors (15) auf Null sowie den Betrieb und das Zurücksetzen des Meßschaltkreises (48) auf Null auszulösen.

8. Vorrichtung nach einem der Ansprüche 3 bis 7, dadurch gekennzeichnet, daß ein Erfassungsmittel (72) für die Impulsbreite des Ausganges des Verbindungsabtasters und eine Einrichtung zum Unterbinden der Betätigung des Motors (15) durch den Steuerschaltkreis (68) vorgesehen sind, wenn die Breite des Impulses größer als eine vorbestimmte, einstellbare Schwelle ist.

9. Vorrichtung nach einem der Ansprüche 3 bis 8, dadurch gekennzeichnet, daß ein Zähler (70) für die von dem Verbindungsabtaster (18) während einer Vorwärtsbewegung des bewegbaren Wagens (22) abgegebene Anzahl von Impulsen und eine Einrichtung zum Unterbinden der Betätigung des Steuerschaltkreises (68) vorgesehen sind, wenn die Anzahl der Impulse größer als eine vorbestimmte Zahl ist.

10. Vorrichtung nach einem der Ansprüche 1 bis 8 oder 9, dadurch gekennzeichnet, daß ein Zähler (76) vorgesehen ist, um die Anzahl der aufeinanderfolgenden Bewegungen des Wagens (22) zu zählen, während der die Betätigung des Steuerschaltkreises (68) des Wagens unterbunden worden war, und um ein Warnsignal oberhalb einer vorgegebenen Zahl abzugeben.

FIG_1

FIG_2

FIG_3

0 036 374

FIG_5

0 036 374

FIG_6

0 036 374